Europäisches Patentamt

European Patent Office

Office européen des brevets

(11) Publication number: **0 451 913 A1**

# EUROPEAN PATENT APPLICATION

(21) Application number: 91200807.5

(22) Date of filing: 08.04.91

(51) Int. Cl.5: **G01T 1/29**

(30) Priority: **11.04.90 NL 9000850**

(43) Date of publication of application:
**16.10.91 Bulletin 91/42**

(84) Designated Contracting States:
**DE FR GB NL**

(71) Applicant: **N.V. Philips' Gloeilampenfabrieken**
**Groenewoudseweg 1**
**NL-5621 BA Eindhoven(NL)**

(72) Inventor: **Mulder, Jakob Wijnand**
**c/o INT. OCTROOIBUREAU B.V., Prof.**
**Holstlaan 6**
**NL-5656 AA Eindhoven(NL)**

(74) Representative: **Zwaan, Andries Willem et al**
**INTERNATIONAAL OCTROOIBUREAU B.V.**
**Prof. Holstlaan 6**
**NL-5656 AA Eindhoven(NL)**

(54) Device for reading a stimulable luminescent screen.

(57) In a device for reading a stimulable luminescent screen, the use of diffuse reflecting reflection means render it possible to effect a light transmission from the screen to a detector, which is relatively insensitive to a relative shift of the screen and the reflection means. Because of the use of diffuse reflection means covering the luminescent screen hemispherically, a relative shift of the luminescent screen with respect to the reflection means is not required.

FIG.4b

EP 0 451 913 A1

The invention relates to a device for reading an image stored in a stimulable luminescent screen, comprising a light source for irradiation of the luminescent screen, a detector for detecting the light emitted by the luminescent screen and reflection means for reflecting the light from the luminescent screen to the detector. Such a device is disclosed in US-P-4,736,102.

In said patent a device is described in which a stimulable luminescent screen is included which on exposure to X-ray beams can store a latent image which corresponds to an intensity distribution of the X-ray beams on the screen. In medical imaging, the X-ray beam is spatially intensity modulated by a patient placed in the X-ray beam. The luminescent screen is put to an excited state by the X-ray radiation and, under the influence of a stimulating light source, for example a laser, emits the stored energy in the form of light. By scanning the luminescent screen, which has for example a size of 40 by 40 cm, in for example 2 $10^8$ elements using a laser having a power of 25mW, the image is read in 1 to 1.5 minute. To reflect the light emitted by the phosphor to a photo detector, an elliptical mirror is placed near the element irradiated by the laser. The irradiated element is located in a first focal point of the mirror. A light guide is located in the second focal point. The light emitted by the phosphor is collected in the second focal point and reaches the photo detector via the light guide. Such a device has the disadvantage that positioning of the light guide must be accurate. Slight shifts in the relative positions of the light guide and the mirror or the luminescent screen and the mirror have a disadvantageous effect on the light output.

It is inter alia an object of the invention to provide a device of the above-defined type, which is relatively insensitive to disturbances and in which the light detection is effected in an efficient manner. To that end, the device according to the invention, is characterized in that the reflection means are provided with a diffuse reflecting reflection plane.

The reflection means with a diffuse reflecting reflection plane need not to be positioned accurately with respect to the detector, as the light reflected from the reflection plane reaches the detector after one or more reflections, substantially independently from the position of the reflection means relative to the detector. Depending on the quantity of light released from the luminescent screen, the reflection means appear lighter or darker. A light transmission from the reflection means to the detector can optionally be improved by arranging a brightness intensifier between the reflection means and the detector.

A preferred embodiment of a device according to the invention, is characterized in that, the reflection plane covers the luminescent screen at least partly hemispherically, the reflection plane being provided with an outlet aperture cooperating with the detector.

Because of the fact that the reflection plane covers the screen hemispherically, the light emitted by the detection screen can be detected without the shape of the reflection plane being of importance therefor. By using an at least hemispherical coverage of the entire luminescent screen by the reflection means a relative shift between the screen and the reflection means is not required. This has the important advantage that the number of mechanically moving components is less.

A further preferred embodiment of a device in accordance with the invention, is characterized in that, the reflection means enclose the luminescent screen substantially completely, the reflection means being provided with at least two outlet apertures cooperating with a detector each having as a field of view a respective side of the luminescent screen.

By using reflection means which substantially surround the luminescent screen, having two outlet apertures viewing different sides of the luminescent screen, an efficient light detection can occur, the light emitted by the luminescent screen which leaves the screen via the rear side also being detected.

An embodiment of a device in accordance with the invention, is characterized in that, the reflection plane is provided with an inlet aperture cooperating with the light source.

The laser beam can reach the luminescent screen through the inlet aperture in the reflection plane. Because of the inlet aperture it is possible to dispose the laser in an easily accessible position and it is not necessary to stimulate the screen from hard-to-access positions not occupied by the reflection means.

Some embodiments of a device in accordance with the invention will now be described in greater detail with reference to the accompanying drawing. In the drawing:

Figure 1 shows a prior art device for reading a stimulable luminescent screen;

Figure 2 and Figure 3 are schematic views of a device according to the invention; and

Figure 4 and Figure 5 are lateral cross-sectional views of a device of the invention.

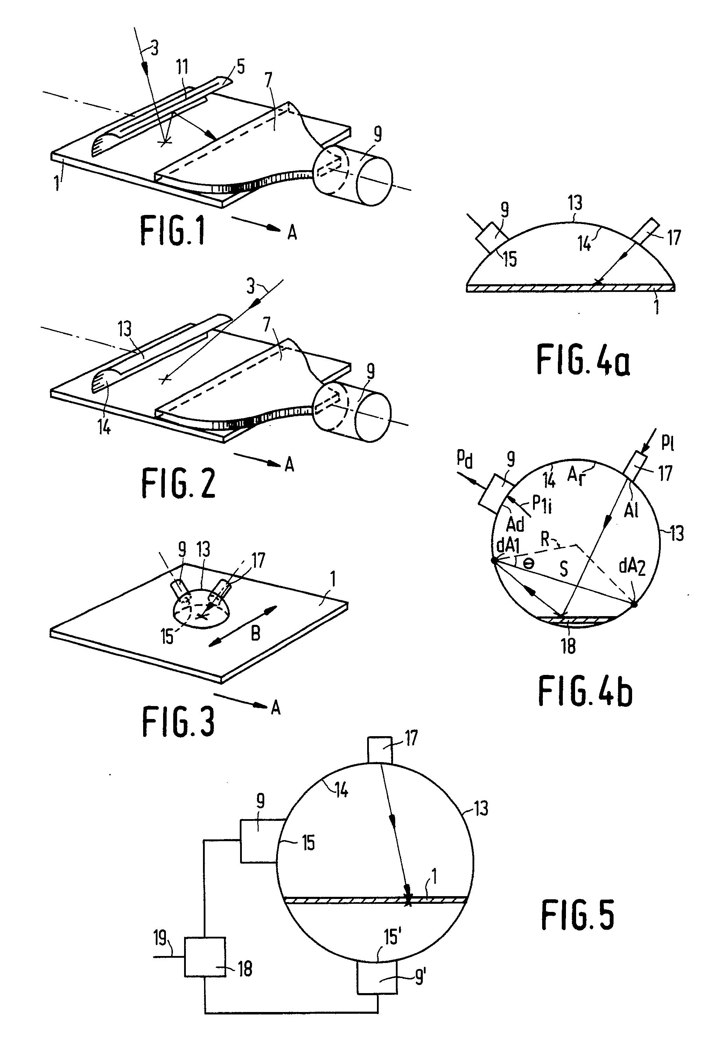

Figure 1 shows a stimulable luminescent screen 1, formed from, for example, $BaF(Cl,Br):Eu^{2+}$. Charge carriers (holes or electrons) released in the luminescent screen 1 by X-ray radiation occupy in the screen 1 energy levels which are available because of the presence of charge capturing centres. By stimulation of the screen 1 by a laser beam 3 having a wavelength of, for example, 700nm, the charge carriers are adjusted while supplying light having a wavelength of, for example, 450 nm to a lower energetic state. The released light is reflected towards a light guide 7 by means of a reflector 5 in the form of a parabolic mirror.

Via the light guide 7 the light arrives at a detector 9, for example, a photodiode or a photomultiplier tube, in which the incoming light flux is converted into an electric signal proportional thereto. Since the light guide is located in one of the focal points of the reflector 5, a shift of the reflector 5 relative to the light guide 7 results in a reduction of the light output at the detector 9. After the laser beam has scanned a line of screen 1 in, for example, 2000 points, the screen 1 shifts relative to the reflector 5 and the light guide 7 in the direction indicated by the arrow A. The laser beam 3 is incident onto the screen in the second focal point of the mirror through an inlet aperture of the mirror 5. Varying the position of the laser beam 3 relative to the mirror 5 results in a fluctuating light output at the detector.

Figure 2 shows an embodiment of a device for reading the luminescent screen 1 in accordance with the invention. Here the mirror 5 of Figure 1 is replaced by a reflection member 13 having a diffuse reflecting reflection plane 14. The light generated by the laser beam 3 in the screen 1 is reflected to all sides by the reflection plane 14, so that the reflection plane gives the impression of "lighting up".

The light reflected by the reflection body 13 is incident on the detector 9 via the light guide 7. A constant light flux to the detector 9 is possible without the necessity of imposing strict requirements on the shape of the reflection member 13 and the accurate relative positioning of the X-ray beam 3, the reflection body 13 and the light guide 7. The reflection member 13 extends, for example, over the entire width of the screen 1. A gap has been left open between the light guide 7 and the reflection member through which the lase beam 3 can impinge on the screen 1.

Figure 3 shows an embodiment in which the reflection member 13 has an outlet aperture 15 cooperating with the detector 9. The laser beam 3 impinges on the screen 1 through an inlet aperture in the reflection member 13. The light released in that portion of the screen that is covered by the reflection member 13 impinges after a number of reflections between the reflection plane 14 and the screen 1 on the detector 9 through the outlet aperture. In this situation a laser 17, the detector 9 and the reflection member 13 can be moved as one integral unit relative to the screen in a direction indicated by the arrows A and B.

Figure 4a shows the reflection member 13 in an embodiment in which the entire screen 1 is hemispherically covered by the reflection member 13. Herein the exact shape of the reflection plane 14 is not important. After a number of diffuse reflections between the screen 1 and the reflection plane 14, the light generated by the laser 17 reaches the detector 9 through the outlet aperture 15. In this embodiment a relative movement of the screen 1 with respect to the reflection member 13, the laser 17 and the detector 9 is not required anymore.

Figure 4b is a schematic representation of the diffuse reflection principle within a spherical reflector. The light generated by the laser 17 in an element 18 of the luminescent screen impinges from the diffuse reflecting reflection plane 14 of the reflection member 13 on a surface $dA_1$. This small surface acts as a Lambert radiator and emits to a small surface $dA_2$ of the reflection member a flux:

$$dP_{1 \to 2} = L_1 \, dA_1 \, dA_2 \, \frac{\cos^2\theta}{S^2}$$

Herein $L_1$ is the luminance (per solid angle), S the spacing between $dA_1$ and $dA_2$ and $\theta$ the angle between the normal vector of $dA_1$ and $dA_2$ and S. For $dP_{1\text{-}> 2}$ there can be written:

$$dP_1 \to 2 = L_1 \frac{dA_1 \, dA_2}{4R^2} \tag{1}$$

wherein R is the radius of the spherical reflection plane 14. For the total flux emitted from the surface $dA_1$, $dP_1$, it holds that:

$$dP_1 = \pi \, L_1 \, dA_1 \tag{2}$$

Substitution of formula (2) in formula (1), results in:

$$dP_{1 \to 2} = dP_1 \frac{dA_2}{4\pi R^2} \tag{3}$$

Formula (3) shows that from the flux emitted from a first surface, a fraction lands on a second surface, which fraction is dual to the portion occupied by the second surface in proportion to the total reflection plane. Put differently, the total outgoing flux from a surface of the reflection members is homogeneously distributed over the overall spherical surface 14. All the reflections within the sphere can be grouped into six fluxes: the flux from and to the surface of the reflection member $A_r$, the flux from and to the surface of the detector $A_d$ and the flux from and to the surface of the laser $A_1$. For the six fluxes the equations hold:

$$Pi_1 = Pt\, A_1/4\pi R^2$$
$$Pi_r = Pt\, A_r/4\pi R^2$$
$$Pi_d = Pt\, A_d/4\pi R^2$$

Herein, $Pi_1$, $Pi_r$ and $Pi_d$ are the incident flux on the laser, the reflection member and the detector, respectively. Pt is the total outgoing flux, $Pt = Pu_1 + Pu_r + Pu_d$. Herein, $Pu_1$, $Pu_r$ and $Pu_d$ are the outgoing flux of the laser, the reflection member and the detector. It also holds that:

$$Pu_1 = R_1 Pi_1 + P_1 \quad (4)$$
$$Pu_r = RPi_r \quad (5)$$
$$Pu_d = O \quad (6)$$
$$Pi_d = P_d \quad (7)$$

In formula 4, $R_1$ is the coefficient of reflection of the laser surface and $P_1$ the power flux brought inside the reflecting sphere by the laser. In formula 5 R is the coefficient of reflection of the reflection members. The detector surface is assumed to be absorbing over its overall surface area. The flux incident on the detector plane is discharged from the reflecting sphere as a power flux $P_d$ (detector signal). For the efficiency of the reflection means

$$\left(\frac{P_d}{P_l}\right)$$

it can be derived with the aid of the above formulae that:

$$\left(\frac{P_d}{P_l}\right) = \frac{A_d}{4\pi R^2 - RA_r - R_l A_l} \qquad (8)$$

Using a coefficient of reflection of the reflection member, R, of 0.98; a reflection coefficient of the laser portion located within the sphere, $R_1$, of 0.6; wherein $A_1 = 16A_d$ and $4\pi R^2 = \beta A_1$, it follows for formula (8) that

$$\left(\frac{P_d}{P_l}\right) = \frac{0,14}{1 + 0,045\beta}$$

This means that within very wide limits for the size of the sphere ($\beta < 10$), the efficiency is of the order of 10%. By supplying a power flux $P_1$ of 60mW, using, for example, a laser or a light source in the form of a television display tube, a read rate can be obtained which is equal to the read rate obtained when a known fibre optic light guide and reflecting reflection members are used, the efficiency being 20% at an applied flux of 30mW.

Figure 5 shows an embodiment in which the reflection member 13 surrounds the luminescent screen. The reflection member is provided with two outlet apertures 15 and 15' cooperating with the detectors 9 and 9'. A summation unit 18 takes the sum of the signals from the detectors 15 and 15' and supplies it as one signal value from an output 19. Thus, the efficiency of the reflection member for light leaving the luminescent screen at the rear side is increased.

**Claims**

1. A device for reading an image stored in a stimulable luminescent screen, comprising a light source for irradiation of the luminescent screen, a detector for detecting the light emitted by the luminescent screen and reflection means for reflecting the light from the luminescent screen to the detector, characterized in that the reflection means are provided with a diffuse reflecting reflection plane.

2. A device as claimed in Claim 1,characterized in that, the reflection plane covers the luminescent screen at least partly hemispherically, the reflection plane being provided with an outlet aperture cooperating with the detector.

3. A device as claimed in Claim 2, characterized in that, the reflection means enclose the luminescent screen substantially completely, the reflection means being provided with at least two outlet apertures cooperating with a detector each having as a field of view a respective side of the luminescent screen.

4. A device as claimed in Claim 1, 2 or 3,characterized in that, the reflection plane is provided with an inlet aperture cooperating with the light source.

5. A device as claimed in anyone of the preceding Claims, characterized in that a brightness intensifier is arranged between the reflection means and the detector.

FIG.1

FIG.2

FIG.3

FIG.4a

FIG.4b

FIG.5

**European Patent Office**

**EUROPEAN SEARCH REPORT**

Application Number

**EP 91 20 0807**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 736 102   (L. MORRONE)<br>* The whole document *<br>— — — | 1 | G 01 T 1/29 |
| A | EP-A-0 142 833   (FUJI PHOTO FILM CO., LTD)<br>* Abstract; figures 1-8 *<br>— — — | 1 | |
| A | EP-A-0 265 007   (N.V. PHILIPS' GLOEILAMPEN-FABRIEKEN)<br>* Abstract; figure 4 *<br>— — — | 1 | |
| A | EP-A-0 169 966   (FUJI PHOTO FILM CO., LTD)<br>* Abstract; figures 1-8 *<br>— — — | 1 | |
| A | PATENT ABSTRACTS OF JAPAN, vol. 9, no. 97 (P-352)[1820], 26th April 1985;<br>& JP-A-59 223 402 (FUJITSU K.K.) 15-12-1984<br>* Whole document *<br>— — — — — | 1 | |

| TECHNICAL FIELDS SEARCHED (Int. Cl.5) |
|---|
| G 01 T |

The present search report has been drawn up for all claims

| Place of search | Date of completion of search | Examiner |
|---|---|---|
| The Hague | 08 July 91 | BAROCCI S. |